# EUROPÄISCHE PATENTSCHRIFT

(11) **EP 2 956 536 B1**
(45) Veröffentlichungstag und Bekanntmachung des Hinweises auf die Patenterteilung: **05.04.2017**
(21) Anmeldenummer: 14704354.1
(22) Anmeldetag: 14.02.2014
(51) Int. Cl.: C12C 7/06, C12C 7/22, F28D 15/00, F28D 20/02, F28D 21/00

(54) **VORRICHTUNG UND VERFAHREN ZUM ERWÄRMEN EINES FERMENTIERBAREN AUSGANGSSTOFFES ZUR GETRÄNKEHERSTELLUNG**
DEVICE AND METHOD FOR HEATING A FERMENTABLE STARTING PRODUCT IN ORDER TO PRODUCE A BEVERAGE
DISPOSITIF ET PROCÉDÉ POUR LE RÉCHAUFFAGE D'UNE MATIÈRE PREMIÈRE FERMENTESCIBLE EN VUE DE LA PRODUCTION DE BOISSONS

(30) Priorität: 15.02.2013 DE 102013202481
(43) Veröffentlichungstag der Anmeldung: 23.12.2015
(73) Patentinhaber: O. Salm & Co. Ges.m.b.H., 1072 Wien (AT)
(72) Erfinder: WELLEDITS, Albert, A-1130 Wien (AT)
(74) Vertreter: TBK
(86) Internationale Anmeldenummer: PCT/EP2014/052892
(87) Internationale Veröffentlichungsnummer: WO 2014/125062

(56) Entgegenhaltungen:
- EP-A1- 0 319 509
- EP-A1- 2 292 726
- EP-B1- 1 715 031
- AT-B- 390 266
- DE-A1- 2 931 854
- JP-A- 2006 101 829
- US-A- 4 801 462

## Beschreibung

Die Erfindung betrifft eine Vorrichtung und ein Verfahren zum Erwärmen eines fermentierbaren Ausgangsstoffes zur Getränkeherstellung gemäß dem Oberbegriff des Anspruchs 1 bzw. des Anspruchs 10.

Die Druckschrift EP 1 715 031 B1 offenbart eine Vorrichtung und ein Verfahren zur Bereitstellung von Wasser oder Wasserdampf als Heizmedium bei einem Prozess. Dabei dient ein Zeolith-Wärmespeicher zur Erwärmung einer Verbrennungsluft.

Die Patentanmeldung EP 0 319 509 A1 offenbart eine Vorrichtung zum Erwärmen von Braumaische, die eine gewundene Würzeleitung (164) sowie einen diese beheizenden Brenner beinhaltet. Die Heizluft wird über das Abgasrohr (8) abgeleitet.

Die Druckschrift DE 93 11 514.8 U1 offenbart ein Heizgerät, in dem durch eine Restwärme eines ersten Mediums eine Vorerwärmung eines in einer Leitung strömenden Mediums stattfindet.

Bekannt ist außerdem aus dem Stand der Technik eine in der Druckschrift AT 390 266 B offenbarte Vorrichtung zum Erwärmen von Braumaische. In dieser Vorrichtung ist eine Leitung durch ein regelmäßig gewundenes (wendelförmiges) Rohr gebildet, das sich innerhalb eines Brennraums befindet. Die Leitung steht mit einer Wärmequelle in Wärme übertragendem Kontakt, wodurch die durch die Leitung strömende Braumaische erwärmt wird. Eine derartige Vorrichtung ist auch als sogenannter Außenkocher bekannt. In Vorrichtungen wie z. B. der anhand der Druckschrift AT 390 266 B beschriebenen ist es möglich, eine beliebige fermentierbare Flüssigkeit unter Einsatz einer vergleichsweise hohen Temperatur innerhalb kurzer Zeit schonend zu erwärmen. Die Druckschrift AT 390 266 B wird als nächstliegender Stand der Technik betrachtet.

Durch die vergleichsweise hohen Temperaturen, die in dem voranstehend beschriebenen Außenkocher verwendet werden, entsteht eine große Menge an Abwärme. Aus ökologischen und wirtschaftlichen Gründen besteht ein Bedarf, diese anfallende Abwärme in sinnvoller Weise zu nutzen.

Eine erfindungsgemäße Vorrichtung zum Erwärmen eines fermentierbaren Ausgangsstoffes hat eine innerhalb eines Brennraums angeordnete Leitung, über die ein Teil einer von einer Wärmequelle in dem Brennraum durch ein erstes Wärmetransportmittel abgegebenen Wärme zu dem in der Leitung strömenden fermentierbaren Ausgangsstoff übertragbar ist. Dem Brennraum ist ein Wärmespeicher nachgeschaltet, um einen Teil der durch das erste Wärmetransportmittel transportierten Restwärme zu speichern. Die Leitung ist dabei derart angeordnet, dass stromaufwärts der Brennkammer durch die in dem Wärmespeicher gespeicherte Wärme eine Vorerwärmung des in der Leitung strömenden fermentierbaren Ausgangsstoffes in einem Vorwärmraum stattfindet.

Fermentierbare Ausgangsstoffe gemäß der Erfindung können dabei alle Stoffgemische oder Reinsubstanzen sein, die zumindest eine fermentierbare Substanz enthalten. Eine fermentierbare Substanz im Sinne der Erfindung ist eine chemische Verbindung, die unter anaeroben und/oder aeroben Bedingungen von Mikroorganismen, wie etwa Hefen und Bakterien, als Energie- bzw. Kohlenstoffquelle genutzt werden kann. Insbesondere fallen darunter Monosaccharide, Disaccharide und Polysaccharide. Besonders bevorzugt sind dabei fermentierbare Ausgangsstoffe, die mindestens eines von Fructose, Glucose, Saccharose, Maltose (Malzzucker) oder Stärke oder eines ihrer Abbauprodukte enthalten.

Insbesondere fallen darunter Ausgangsstoffe zur Herstellung von Bier, wie z. B. Maische, Brauwürze, abgeleitete Nachprodukte, Rohfrüchte in Wasser gelöst (wie z. B. Reis oder Mais). Als Brennraum im Sinne der Erfindung ist nicht nur ein Raum zu verstehen, in dem eine Verbrennung eines geeigneten Brennstoffes wie Öl, Holz oder Gas stattfindet, sondern ganz allgemein ein Raum, in dem eine Wärme von einer Wärmequelle über ein Wärmetransportmittel zu der Leitung und über diese zu dem fermentierbaren Ausgangsstoff übertragen wird.

Erfindungsgemäß wird ein großer Teil der Abwärme in dem Wärmespeicher gespeichert, der dem Brennraum nachgeschaltet ist. Durch die Leitungsführung gemäß der Erfindung kann der in der Leitung strömende fermentierbare Ausgangsstoff mittels der in dem Wärmespeicher gespeicherten Wärme vorgewärmt werden. Dies ermöglicht einerseits eine genauere Regulierung der Wärmemenge, die dem fermentierbaren Ausgangsstoff in dem Bereich des Brennraums zugeführt wird, und ermöglicht andererseits massive Energieeinsparungen.

Vorteilhaft kann zwischen dem Brennraum und dem Wärmespeicher eine Übertragung eines Teils der Restwärme von dem ersten Wärmetransportmittel zu einem zweiten Wärmetransportmittel stattfinden. Damit kann beispielsweise die Restwärme von einem gasförmigen Wärmetransportmittel wie z. B. einem Abgas eines Verbrennungsvorgangs zu einem flüssigen Wärmetransportmittel wie z. B. Wasser oder Thermoöl übertragen werden, was die Handhabbarkeit vereinfacht.

Der Einsatz von Thermoöl kann besonders vorteilhaft sein, da Thermoöl beispielsweise mittels elektrischer Heizelemente erwärmt werden kann, wodurch bei entsprechender Stromerzeugung (Windstrom, Solarstrom, Wasserkraft) eine Abgasbelastung der Umwelt vermieden wird. Darüber hinaus kann Thermoöl für höhere Temperaturbereiche verwendet werden, ohne seinen Aggregatzustand oder Druck zu ändern, da seine Siedetemperatur unter Umgebungsdruck mehr als 300° C beträgt. Daher ist eine Verwendung von Thermoöl in Temperaturbereichen von bis zu 300° C möglich. Außerdem ist die energetische Effizienz von Thermoöl wesentlich besser als die von z. B. Wasser oder Dampf.

Vorteilhaft entspricht eine Menge des zweiten Wärmetransportmittels in dem Vorwärmraum maximal einer Menge des fermentierbaren Ausgangsstoffes in der Leitung in dem Vorwärmraum. Dies bedeutet, dass das Volumen des zweiten Wärmetransportmittels innerhalb des Vorwärmraums, beispielsweise einem Thermoöl, nicht größer ist als das des von diesem aktuell erwärmten fermentierbaren Ausgangsstoffes. Dabei kann aufgrund der günstigen Volumenverhältnisse zwischen dem ersten Wärmetransportmittel und dem fermentierbarem Ausgangsstoff über das Produkt aus Temperatur und Volumen pro Zeiteinheit die dem fermentierbaren Ausgangsstoff zugeführte Wärmemenge mit hoher Genauigkeit geregelt werden.

Besonders vorteilhaft kann die Übertragung des Teils der Restwärme regelbar ausgeführt sein. Beispielsweise kann dann dafür gesorgt sein, dass die Übertragung der Restwärme erst stattfindet, wenn das erste Wärmetransportmittel eine bestimmte Mindesttemperatur erreicht hat.

Vorteilhaft kann die Übertragung des Teils der Restwärme von dem ersten Wärmetransportmittel zu dem zweiten Wärmetransportmittel mittels eines Abzweigs, eines Schaltventils, einer Fluidpumpe oder eines Ventilators erfolgen. Bevorzugt wird über eines oder mehrere dieser Elemente das erste Wärmetransportmittel zu einem Wärmetauscher geleitet, wo die Wärme zu dem zweiten Wärmetransportmittel übertragen wird.

Vorteilhaft kann der Wärmespeicher in Form von mindestens einem Latentwärmespeicher ausgebildet sein. In dem Latentwärmespeicher findet eine Übertragung von Wärme von dem Wärmetransportmittel zu einem Phasenwechselmaterial in dem Latentwärmespeicher oder umgekehrt statt. Die Verwendung eines Latentwärmespeichers ermöglicht das Speichern der Wärme auf nahezu unbegrenzte Zeit. Entsprechend kann nach dem Beenden eines Kochvorgangs mit der erfindungsgemäßen Vorrichtung zum Erwärmen eines fermentierbaren Ausgangsstoffes auch nach längerer Ruhedauer ein neuer Kochvorgang von Anfang an mit einem vorgewärmten fermentierbaren Ausgangsstoff begonnen werden, da die Wärme in dem Latentwärmespeicher nahezu unbegrenzt gespeichert werden kann. Durch Nutzung der in dem Latentwärmespeicher gespeicherten Wärme zum Vorerwärmen des fermentierbaren Ausgangsstoffes gelangt dieser vorteilhaft bereits mit erhöhter Temperatur zu dem Brennraum, wo er weiter erwärmt wird. Zur Erlangung einer Solltemperatur des fermentierbaren Ausgangsstoffes ist daher nur eine geringere Wärmemenge notwendig.

Als Phasenwechselmaterial wird bevorzugt ein Salz oder ein Paraffin eingesetzt. Bevorzugt liegt die Verflüssigungstemperatur des Phasenwechselmaterials zwischen 130° C und 150° C, am meisten bevorzugt ist dabei eine Temperatur von 145° C. Dessen Rekristallisierungstemperatur liegt bevorzugt zwischen 130° C und 120° C.

Vorteilhaft können Steuermittel vorgesehen sein, die eine Zufuhr des zweiten Wärmetransportmittels zu dem Vorwärmraum und/oder dem Latentwärmespeicher basierend auf einer Temperatur des ersten Wärmetransportmittels stromabwärts von dem Brennraum und/oder einer Temperatur des zweiten Wärmetransportmittels stromabwärts von dem Vorwärmraum steuern.

Dies ermöglicht ein Entladen bzw. Laden des Latentwärmespeichers mit gleichzeitigem Vorwärmen des fermentierbaren Ausgangsstoffes bzw. lediglich ein Laden des Latentwärmespeichers, ohne den fermentierbaren Ausgangsstoff gleichzeitig vorzuwärmen.

Vorteilhaft können die Steuermittel in Form einer Ladepumpe und einer Entladepumpe bereitgestellt sein. Dabei bewirken die Ladepumpe in einem eingeschalteten Zustand und die Entladepumpe in einem ausgeschalteten Zustand eine Strömung des zweiten Wärmetransportmittels durch den Latentwärmespeicher in einer ersten Richtung. Dies entspricht einem Zustand, in dem lediglich der Latentwärmespeicher mit dem zweiten Wärmetransportmittel versorgt wird und lediglich dieser geladen wird, ohne dass ein Vorerwärmen des fermentierbaren Ausgangsstoffes stattfindet.

Die Ladepumpe in einem ausgeschalteten Zustand und die Entladepumpe in einem eingeschalteten Zustand bewirken eine Strömung des zweiten Wärmetransportmittels durch den Vorwärmraum und den Latentwärmespeicher in einer zweiten Richtung. In diesem Zustand findet lediglich ein Vorerwärmen des fermentierbaren Ausgangsstoffes statt. Bevorzugt ist dies der Fall, wenn nach einem Stillstand ein neuer Herstellungszyklus begonnen wird. Dabei wird der vergleichsweise kalte fermentierbare Ausgangsstoff vor allem mit der Wärme aus dem Latentwärmespeicher vorerwärmt, da in dem Brennraum die gewünschte Betriebstemperatur noch nicht erreicht ist.

Befinden sich die Ladepumpe und die Entladepumpe in einem eingeschalteten Zustand, bewirken sie eine Strömung des zweiten Wärmetransportmittels durch den Vorwärmraum und den Latentwärmespeicher in der ersten Richtung. In diesem Fall kommt es sowohl zu einer Ladung des Latentwärmespeichers wie auch zu einer Vorerwärmung des fermentierbaren Ausgangsstoffes.

Vorteilhaft kann die Vorrichtung zum Erwärmen eines fermentierbaren Ausgangsstoffes als Außenkocher ausgeführt sein.

Ein erfindungsgemäßes Verfahren zum Erwärmen eines fermentierbaren Ausgangsstoffes weist die folgenden Schritte auf: Transportieren des fermentierbaren Ausgangsstoffes durch eine Leitung, Erwärmen des fermentierbaren Ausgangsstoffes mittels Übertragen eines Teils einer von einer Wärmequelle über ein Wärmetransportmittel abgegebenen Wärme zu dem in der Leitung strömenden fermentierbaren Ausgangsstoff in einem Brennraum, Speichern eines Teils der durch das Wärmetransportmittel transportierten Restwärme in einem dem Brennraum nachgeschalteten Wärmespeicher, und Vorerwärmen des in der Leitung strömenden fermentierbaren Ausgangsstoffs stromaufwärts des Brennraums durch die in dem Wärmespeicher gespeicherte Wärme in einem Vorwärmraum.

Bevorzugt kann eine Maximaltemperatur des ersten Wärmetransportmittels bei 168° C liegen, insbesondere, falls das erste Wärmetransportmittel ein von einer Verbrennung herrührendes Abgas ist. Diese Temperatur kann auch von dem zu fermentierenden Ausgangsstoff in dem Bereich des Brennraums erreicht werden.

Vorteilhaft kann gemäß dem erfindungsgemäßen Verfahren ein Teil der Restwärme zwischen dem Brennraum und dem Wärmespeicher von dem ersten Wärmetransportmittel zu einem zweiten Wärmetransportmittel übertragen werden. Dies ermöglicht beispielsweise den Wärmeübergang von einem gasförmigen Wärmetransportmittel, wie einem Verbrennungsabgas zu einem flüssigen Wärmetransportmittel, dessen Handhabbarkeit vereinfacht ist.

Die Temperatur des ersten Wärmetransportmittels während der Übertragung der Wärme zu dem zweiten Wärmetransportmittel kann vorteilhaft in einem Bereich zwischen 100° C und 170° C liegen. Bevorzugt beträgt sie maximal 168° C. Die Temperatur des zweiten Wärmetransportmittels, das in einem geschlossenen, über den Wärmespeicher geführten Kreislauf geführt sein kann, kann durch die Wärmeübertragung auf bis zu 155° C erhöht werden.

Vorteilhaft wird die Wärme von dem zweiten Wärmetransportmittel zu einem Phasenwechselmaterial in dem als mindestens ein Latentwärmespeicher ausgebildeten Wärmespeicher oder umgekehrt übertragen.

Dabei erfolgt
a) das Vorerwärmen des in der Leitung strömenden fermentierbaren Ausgangsstoffes in dem Vorwärmraum durch Entladen des Latentwärmespeichers, indem verursacht wird, dass das zweite Wärmetransportmittel von dem Latentwärmespeicher zu dem Vorwärmraum strömt, wenn die Temperatur des ersten Wärmetransportmittels stromabwärts des Brennraums unterhalb einer vorbestimmten Grenztemperatur liegt,
b) das Vorerwärmen des in der Leitung strömenden fermentierbaren Ausgangsstoffes in dem Vorwärmraum und gleichzeitiges Laden des Latentwärmespeichers, indem verursacht wird, dass das zweite Wärmetransportmittel in einem geschlossenen Kreislauf über einen Wärmetauscher, an dem eine Übertragung von Wärme von dem ersten Wärmetransportmittel zu dem zweiten Wärmetransportmittel stattfindet, durch den Latentwärmespeicher und den Vorwärmraum strömt, und
c) lediglich ein Laden des Latentwärmespeichers, indem verursacht wird, dass ein Zugang zu dem Vorwärmraum versperrt wird, während das zweite Wärmetransportmittel in dem geschlossenen Kreislauf über den Wärmetauscher, an dem eine Übertragung von Wärme zu dem zweiten Wärmetransportmittel stattfindet, und durch den Latentwärmespeicher strömt.

Somit ist es möglich, in einer Anfangsphase eines Getränkeherstellungsvorgangs die in dem Latentwärmespeicher gespeicherte Wärme zur Vorerwärmung des fermentierbaren Ausgangsstoffes zu nutzen, bis eine Temperatur in einem Brennraum eine Solltemperatur erreicht hat. Danach ist es möglich, durch teilweises Vorwärmen und gleichzeitiges Laden des Latentwärmespeichers die Temperatur in dem Brennraum so anzupassen, dass ein erwünschter Temperaturunterschied des fermentierbaren Ausgangsstoffes stromaufwärts des Vorwärmraums und stromabwärts des Brennraums, ohne übermäßigen Brennstoffverbrauch erreicht wird. In der Schlussphase des Getränkeherstellungsvorgangs kann dann die Vorerwärmung abgestellt werden. In diesem Fall können mittels einer erhöhten Temperatur in dem Brennraum der fermentierbare Ausgangsstoff erwärmt und der Latentwärmespeicher wieder vollständig geladen werden. Dies bedeutet, dass das Phasenwechselmaterial in dem Latentwärmespeicher vollständig in die flüssige Phase übergeführt wird.

Vorteilhaft kann dabei
Schritt a) durchgeführt werden, solange eine Temperatur des ersten Wärmetransportmittels stromabwärts des Brennraums unter einer vorgegebenen Mindesttemperatur liegt und ein Mindestanteil des Phasenwechselmaterials in flüssiger Form vorliegt,
Schritt b) durchgeführt werden, wenn die Temperatur des ersten Wärmetransportmittels stromabwärts des Brennraums die vorgegebene Mindesttemperatur überschritten hat, und
Schritt c) durchgeführt werden, wenn die Temperatur des ersten Wärmetransportmittels stromabwärts des Brennraums (3) eine vorgegebene Ladetemperatur überschritten hat.

Dabei kann in dem Schritt b) eine Temperaturregelung in dem Brennraum in Abhängigkeit einer Temperaturdifferenz des fermentierbaren Ausgangsstoffes zwischen einem Punkt stromaufwärts des Vorwärmraums und stromabwärts des Brennraums vorgenommen werden.

Weitere Vorteile der Erfindung werden aus der folgenden Beschreibung von derzeit bevorzugten Ausführungsformen ersichtlich, die mit Bezug auf die anhängenden Figuren gegeben werden. In den Zeichnungen zeigt:
Fig. 1 eine schematische Ansicht einer Vorrichtung zum Erwärmen eines fermentierbaren Ausgangsstoffes gemäß einer ersten Ausführungsform der Erfindung, und
Fig. 2 a) bis d) schematisch einen Lade- bzw. Entladevorgang eines Latentwärmespeichers, der als Speicher in einer erfindungsgemäßen Vorrichtung zum Erwärmen eines fermentierbaren Ausgangsstoffes eingesetzt ist.

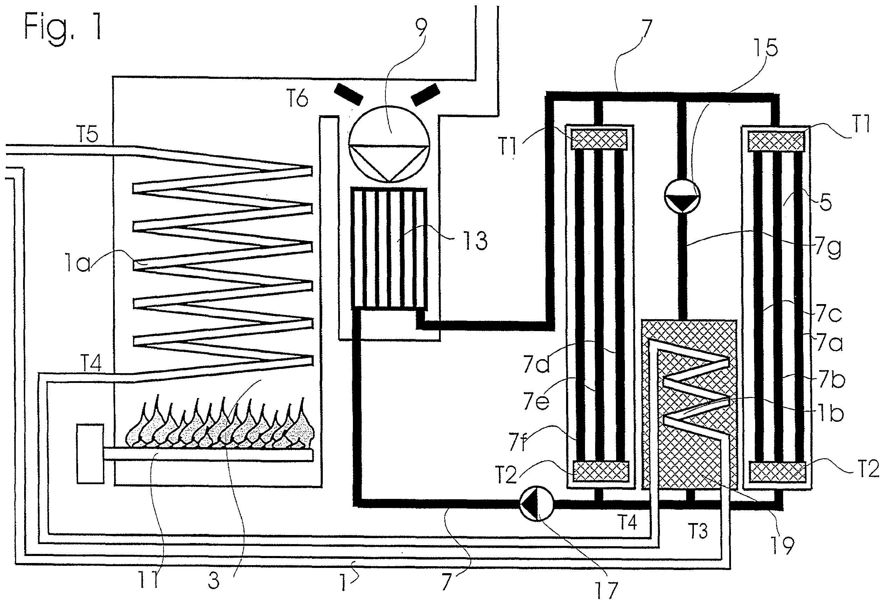

Eine erfindungsgemäße Vorrichtung zum Erwärmen eines fermentierbaren Ausgangsstoffes ist schematisch in Fig. 1 dargestellt. Als Beispiel für den fermentierbaren Ausgangsstoff wird in der folgenden Beschreibung eine Maische verwendet. Die beispielhafte Verwendung von Maische schließt jedoch die Verwendung der Erfindung mit anderen fermentierbaren Ausgangsstoffen, wie z. B. Brauwürze oder abgeleitete Nachprodukte, wie z. B. in Wasser gelöste Rohfrucht (Reis oder Mais), Obstsäfte usw. nicht aus.

Die Maische strömt durch eine Leitung 1 durch einen im Innenbereich eines im Wesentlichen zylinderförmigen Latentwärmespeichers 5 vorgesehenen Vorwärmraums 19. In dem Vorwärmraum 19 bildet die Leitung 1 einen Wendelbereich, über den die Maische in der Leitung 1 Wärme von einem als zweitem Wärmetransportmittel eingesetzten Thermoöl aufnehmen kann. Dabei wird die Maische in dem Bereich des Vorwärmraums um maximal 4,8° C erhöht, da es ansonsten zu einer unerwünschten Auszuckerung kommen kann.

Nach dem Passieren des wendelförmigen Bereichs 1b der Leitung 1 in dem Vorwärmraum 19 ist die Leitung 1 zu einem Brennraum 3 eines Außenkochers geführt. Innerhalb des Brennraums 3 nimmt die Leitung 1 abermals eine Wendelform 1a ein. In dem Brennraum 3 ist außerdem ein Brenner 11 angeordnet, über den geeignete Brennstoffe, wie z. B. Gas, Öl, Holz oder Holzprodukte verfeuert werden.

Die durch das Verfeuern entstandenen Brenngase, bzw. Abgase streichen entlang des wendelförmigen Bereichs 1a der Leitung 1 und erwärmen die darin befindliche Maische somit weiter auf eine gewünschte Temperatur. Nach dem Passieren des wendelförmigen Bereichs 1a werden die Abgase über einen Ventilator 9 weiter zu einem Wärmetauscher 13 geleitet. Durch den Wärmetauscher 13 strömt ein erkaltetes Thermoöl mit einer Temperatur T2 von ca. 115° C, welches in dem Wärmetauscher 13 die Wärme des von dem Ventilator 9 zugeführten Abgases aufnimmt und dabei wieder eine Temperatur T1 von ca. 145° C erreicht. Das Thermoöl wird über einen geschlossenen Kreislaufs 7 mittels einer als Ladepumpe bezeichneten Pumpe 17 zu dem Latentwärmespeicher 5 gepumpt.

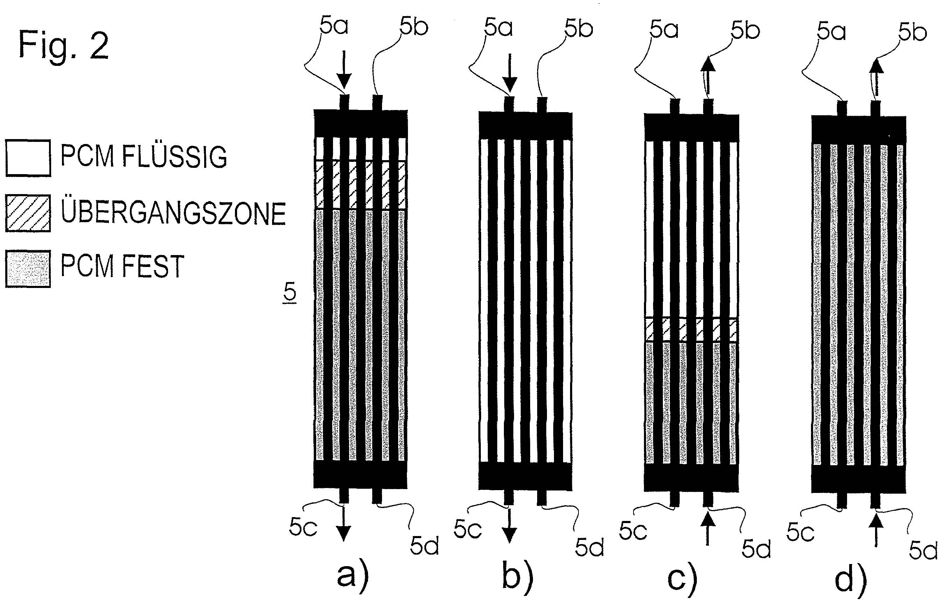

Der Latentwärmespeicher 5 besteht im Wesentlichen aus einem ringförmig angeordneten Rohrbündel, das in der schematischen Ansicht der Fig. 1 bzw. auch der Fig. 2 geschnitten dargestellt ist. Das durch die einzelnen Rohre 7a bis 7f des Rohrbündels geleitete Thermoöl gibt dabei seine Wärme an ein in dem Bereich der Rohre 7a bis 7f vorgesehenes Phasenwechselmaterial wie z. B. Salz oder Paraffin (auch als "PCM" bezeichnet) ab. Das Phasenwechselmaterial wird dadurch erwärmt und ändert dabei seine Phase von einer festen kristallinen Phase zu einer flüssigen Phase. In einem Eingangsbereich (in der Fig. 1 ein oberer Bereich des Latentwärmespeichers 5) und einem Ausgangsbereich des Latentwärmespeichers 5 befinden sich Speicherräume für das Thermoöl. In diesen weist das Thermoöl die Temperaturen T1 von ca. 145° C bzw. T2 von ca. 115° C auf.

Im Folgenden werden verschiedene Betriebsarten der Vorrichtung zum Erwärmen eines fermentierbaren Ausgangsstoffes beschrieben.

### Entladebetrieb

In einem reinen Entladebetrieb ist die Ladepumpe 17 abgeschaltet und das Thermoöl wird über die Entladepumpe 15 durch eine Thermoölleitung 7f zu dem Vorwärmraum 19 gepumpt. Der Latentwärmespeicher 5 ist vollständig geladen, d. h. das Phasenwechselmaterial liegt vollständig in einer flüssigen Phase vor. Bevorzugt wird Paraffin als Phasenwechselmaterial verwendet. Das Thermoöl wird dem Latentwärmespeicher 5 über einen Ausgangsanschluss 5b entnommen und nach dem Durchströmen des Vorwärmraums 19 wieder über einen Eingangsanschluss 5d in den Latentwärmespeicher 5 eingebracht. Somit ändert sich das Paraffin in dem Latentwärmespeicher 5 aufgrund der Abkühlung durch das kühle Thermoöl zu einer festen Phase. Dies ist beispielhaft in Fig. 2c gezeigt, gemäß der das Thermoöl in der Figur oben aus dem Latentwärmespeicher 5 entnommen und unten wieder in diesen eingebracht wird. Der Entladebetrieb kann fortgeführt werden, bis das gesamte Paraffin die feste Phase eingenommen hat.

Der reine Entladebetrieb wird vor allem dann durchgeführt, wenn ein neuer Getränkeherstellungsvorgang (Brauvorgang) begonnen wird, und der Außenkocher die erforderliche Betriebstemperatur noch nicht erreicht hat.

### Parallelbetrieb

In dem Parallelbetrieb wird ein Teil des Thermoöls direkt durch die Thermoölleitung 7f mittels der Entladepumpe 15 durch das Innere des Latentwärmespeichers geleitet und direkt zu dem den wendelförmigen Bereich 1b der Leitung 1 umgebenden Vorwärmraum 19 zugeführt. Dabei dient es wiederum zum Vorwärmen der Maische in dem wendelförmigen Bereich 1b der Leitung 1. Wie das Thermoöl im Latentwärmespeicher, liegt die Eintrittstemperatur T1 des Thermoöls in den Raum 19 bei ca. 145° C, während die Austrittstemperatur T2 bei ca. 115° C liegt. Die Maische wird dabei auf eine Temperatur von bis zu maximal 98° C (Würze bis zu 106° C) erwärmt. Bevorzugt kann diese direkte Zufuhr des Thermoöls über die Pumpe 15 geregelt werden.

Das durch den Latentwärmespeicher bzw. durch die Leitung 7g geströmte und nun abgekühlte Thermoöl wird sodann über die Ladepumpe 17 über den Kreislauf 7 wieder zu dem Wärmetauscher 13 zurückgepumpt, um dort wieder die Wärme des Rauchgases aufzunehmen. Gleichzeitig strömt ein Teil des erwärmten Thermoöls durch den Latentwärmespeicher, um diesen zumindest teilweise aufzuladen, d. h. festes Paraffin in flüssiges Paraffin umzuwandeln.

Während des Parallelbetriebes ist es möglich, je nach Ladezustand des Latentwärmespeichers, die dem Brennraum 3 zugeführte Energie so anzupassen, dass eine Überladung des Latentwärmespeichers vermieden wird. Dabei werden die Vorerwärmung in dem Vorwärmraum 19 und die Erwärmung in dem Brennraum so geregelt, dass eine Temperaturdifferenz T5 - T3 der Maische stromaufwärts des Vorwärmraums und stromabwärts des Brennraums maximal 5° C beträgt, um eine unerwünschte Verzuckerung zu vermeiden.

Eine Steuerung (nicht dargestellt) sorgt während es Parallelbetriebs dafür, dass bei zu starker Entladung des Latentwärmespeichers 5 die Verbrennung in dem Brennraum 3 verstärkt wird, wodurch die Abgastemperatur wie auch die Temperaturdifferenz T5 - T4 der Maische zwischen einem Punkt (T5) stromabwärts des Brennraums 3 und einem Punkt stromaufwärts (T4) des Brennraums 3 sich bis zu einer Abgastemperatur T6 von 168° stromabwärts des Brennraums erhöht. Entsprechend sorgt die Steuerung dafür, dass die Maische in dem Vorwärmraum 19 weniger stark vorerwärmt wird, d. h. die Temperaturdifferenz zwischen einem Punkt (T3) stromaufwärts des Vorwärmraums 19 und einem Punkt (T4) stromabwärts des Vorwärmraums geringer wird.

Insgesamt darf im Fall der Ausführungsform, gemäß der eine Maische als fermentierbarer Ausgangsstoff erwärmt wird, der gesamte Temperaturanstieg (T5 - T3) der Maische 5° C nicht übersteigen. Gemäß der Ausführungsform ist nämlich bei maximaler Thermoölzufuhr in den Vorwärmraum 19 bzw. maximaler Rauchgaszufuhr in dem Brennraum 3 in jedem der Räume ein Temperaturanstieg der Maische von 4,8° C möglich. Somit wird durch das wechselweise Einstellen der Verbrennungsleistung in dem Brennraum 3 einerseits und der Thermoölzufuhr zu dem Vorwärmraum 19 bzw. dem Latentwärmespeicher 5 andererseits dafür gesorgt, dass die Summe der beiden Temperaturdifferenzen T5 - T4 und T4 - T3 den vorgegebenen Wert nicht übersteigt.

Durch entsprechendes Anpassen der Temperatur in dem Vorwärmraum 19 kann daher die Energiezufuhr in dem Brennraum 3 entsprechend verringert werden, was in ökonomischer Hinsicht ausgesprochen vorteilhaft ist, da Brennstoff eingespart werden kann.

### Ladebetrieb

In dem Ladebetrieb ist die Entladepumpe 15 abgeschaltet, wodurch das Thermoöl nur durch den Latentwärmespeicher 5 strömen kann, da es lediglich von der Ladepumpe 17 in dem Kreislauf 7 zu dem Wärmetauscher 13 und von diesem wieder zu dem Eingangsanschluss 5a des Latentwärmespeichers 5 gepumpt wird. Der Ladebetrieb wird bevorzugt in der Endphase eines Getränkeherstellungsvorgangs eingesetzt, um den Latentwärmespeicher 5 für den Anfang eines nachfolgenden Getränkeherstellungsvorgangs vorzubereiten.

Es ist anzumerken, dass die voranstehend erwähnten Temperaturen und Temperaturdifferenzen lediglich anhand einer Maische als vorzuwärmendem Ausgangsstoff als beispielhaft anzusehen sind.

Fig. 2a) bis d) zeigt schematisch einen Lade- bzw. Entladevorgang eines Latentwärmespeichers. Wie bereits voranstehend erwähnt, sind eine flüssige, eine Übergangs- und eine feste Phase des Phasenwechselmaterials in dem Latentwärmespeicher mittels weißer, kreuzschraffierter bzw. grauer Füllung kenntlich gemacht.

Fig. 2a) zeigt, dass bei der Ladung eines kalten Latentwärmespeichers mit PCM-Füllung das kalte Thermoöl durch einen Ausgangsanschluss 5c abgesaugt wird, um durch die Pumpe 17 zu dem Wärmetauscher 13 gepumpt zu werden. Durch den Eingangsanschluss 5a kommt es dann wieder heiß in den Latentwärmespeicher 5, wo es (in der Fig. von oben nach unten) die Wärme an den Latentwärmespeicher 5 abgibt. Mit fortschreitender Ladung, beginnt das PCM sich von oben nach unten zu verflüssigen, die Gesamttemperatur des Thermoöl-Kreislaufes beginnt zu steigen. In der Übergangszone zwischen der festen und flüssigen Phase (Kalt- und Warmzone) ist das PCM nur um das Rohrbündel herum verflüssigt, in der Warmzone zur Gänze.

Erfindungsgemäß gilt der Latentwärmespeicher als geladen, wenn etwa 90% des PCM verflüssigt sind.

Fig. 2b) zeigt schematisch den geladenen Zustand des Latentwärmespeichers 5.

Fig. 2c) und 2d) zeigen schematisch einen Zustand während der Entladung. Hier wird über einen Anschluss 5b das heiße Thermoöl über die Entladepumpe 15 aus dem Latentwärmespeicher abgepumpt, und dem Vorwärmraum 19 zugeführt. Das dadurch abgekühlte Thermoöl wird wieder (in der Fig. 2c) von unten) dem Latentwärmespeicher zugeführt. Dabei ändert das PCM den Aggregatzustand von flüssig zu fest. Mit fortschreitender Entladung steigt die Übergangszone von fest auf flüssig langsam nach oben. Aufgrund einer schlanken Bauform des Latentwärmespeichers 5 wird die Übergangsphase gering gehalten. Dies hilft dabei, dass selbst bei fortschreitender Entladung die Austrittstemperatur an dem Ausgangsanschluss 5b nahezu unverändert bleibt.

Wenn die Austrittstemperatur des Thermoöls zu sinken beginnt, ist der Latentwärmespeicher als entladen zu betrachten, selbst wenn noch eine Restwärmemenge gespeichert bleibt (Fig. 2d).

Erfindungsgemäß ist die Anordnung des Rohrbündels, durch welches das Thermoöl zirkuliert, so gewählt, dass zwischen den Kernzonen des PCM und den Rohrwänden des Rohrbündels in etwa gleiche Abstände bestehen. Der Grund dafür liegt in der Beschaffenheit des PCM während des Phasenwechsels, da dieser gleitend von dem flüssigen Zustand zu dem festen Zustand erfolgt. In dem festen Zustand ist die Wärmeleitfähigkeit sehr gering. Aus diesem Grund ist die Strecke zwischen der Zone des verflüssigten PCM und des erstarrten PCM relativ gleichmäßig und gering, damit eine entsprechende Lade- und Entladeleistung pro Zeiteinheit gewährleistet ist. Die Dimensionierung des Rohrbündels ist so gestaltet, dass das Gesamtvolumen des Thermoöls keinesfalls größer ist als das Gesamtvolumen des PCM, da sich ansonsten eine präzise Leistungsregelung nicht gewährleisten läßt. Zur Effizienzsteigerung trägt es außerdem bei, wenn in dem Rohrbündel annähernd laminare Strömungsbedingungen vorliegen.

Da der Phasenwechsel des PCM gleitend stattfindet, sind die physikalischen Eigenschaften der Wärme zu berücksichtigen. Überraschend wurde herausgefunden, dass der Wirkungsgrad der Speicherleistung mit der Minimierung der Übergangszone zwischen warmer Phase und kalter Phase steigt. Der Latentwärmespeicher ist daher als Verdrängungs-Wärmespeicher ausgeführt. Dies bedeutet, dass der Latentwärmespeicher eine maximale vertikale Ausrichtung bei gleichzeitiger geringer horizontaler Ausbreitung aufweist. Vorzugsweise ist das Verhältnis von Durchmesser zur Bauhöhe größer als 1:4. Die Minimierung der Bauhöhe ergibt sich aus der Speicherkapazität des PCM.

In den Fig. 1 und 2 sind die Thermoölleitungen mittels dicker schwarzer Linien dargestellt. Außerdem sind in Fig. 1 die Thermoöl enthaltenden (Speicher-) Räume mit einer Kreuzschraffur dargestellt und die Leitung für den fermentierbaren Ausgangsstoff sind mittels Doppellinie dargestellt. In Fig. 2 sind die unterschiedlichen Phasen in dem Thermospeicher mittels grauer Schattierung für die feste Phase, Kreuzschraffur für eine Übergangsphase zwischen fest und flüssig und weiß für die flüssige Phase gekennzeichnet.

Während die Erfindung mit Bezug auf derzeit bevorzugte Ausführungsbeispiele beschrieben wurde, ist festzuhalten, dass der Bereich der Erfindung lediglich durch die anhängenden Ansprüche definiert ist.

Vorteilhafte Abwandlungen und/oder Kombinationen der in den Ausführungsbeispielen gezeigten Elemente sind jederzeit möglich. Beispielsweise wurde anhand der Ausführungsform beschrieben, dass die Abgase über einen Ventilator zu dem Wärmetauscher gezogen werden, in welchem das Thermoöl erhitzt wird. Vorteilhaft kann auch eine Anordnung vorgesehen werden, in der anstelle des Ventilators eine andere pneumatische Pumpe vorgesehen ist, oder ein Strömen des Abgases zu dem Wärmetauscher über bauliche Maßnahmen, wie z. B. entsprechende Verrohrungen oder Abzweige herbeigeführt wird. Eine Regelung der Abgaszufuhr zu dem Wärmetauscher kann auch vollständig entfallen.

Gemäß den Ausführungsformen wurde der Latentwärmespeicher als im Wesentlichen zylinderförmig beschrieben. Alternativ kann der verwendete Latentwärmespeicher z. B. aus zwei Speichern bestehen, die innen ein Rohrbündelpaket aufweisen. An einem Ende der Speicher kann sich die Verteilerkammer befinden, in die das heiße Thermoöl mit einer Temperatur T1 einströmt. Nach dem Durchströmen der einzelnen Rohre des Rohrbündels kann das dann abgekühlte Thermoöl mit einer Temperatur T2 in einer Sammelkammer gesammelt werden, bevor es wieder aus dem Latentwärmespeicher abgeführt wird.

Als Speichermedium wird bevorzugt ein Paraffin verwendet, das sich bei ca. 145° C verflüssigt und dessen Rekristallisierung sich bei Abkühlung bei unter 130° C beginnt und bei ca. 120° C abschließt. Je nach Größe des Latentwärmespeichers können auf diese Art und Weise vergleichbar große Energiemengen an Wärmeenergie gespeichert werden, die in sehr kurzer Zeit speicherbar und abrufbar sind.

Vorteilhaft kann eine Ladung des Energiespeichers erst dann vorgenommen werden, wenn die Abgase von dem Brenner ausreichend heiß sind, bzw. das durch den Brennraum gepumpte Thermoöl eine entsprechende Temperatur erreicht hat.

Vorteilhaft kann bei einem längeren Außenkochvorgang auch bei bereits geladenem Wärmespeicher eine direkte Wärmerückgewinnung zum Vorwärmen der Maische in dem wendelförmigen Bereich 1b vorgenommen werden.

Vorteilhaft kann die Vorrichtung zum Erwärmen eines fermentierbaren Ausgangsstoffes (der Außenkocher) auch betrieben werden, falls der Latentwärmespeicher eine Störung aufweist und er aus diesem Grund nicht genutzt werden kann.

Die direkte Zufuhr des Thermoöls zu dem Raum, der den wendelförmigen Bereich der Leitung innerhalb des Latentwärmespeichers umgibt, wird über die Pumpe geregelt. Alternativ oder zusätzlich können auch Sperrventile oder Ähnliches vorgesehen sein, um die Durchströmung der Ölleitung direkt zu dem Raum, der den wendelförmigen Bereich der Leitung innerhalb des Latentwärmespeichers umgibt, geregelt zu ermöglichen oder zu unterbinden.

Obwohl anhand der Ausführungsform beschrieben wurde, dass die Steuerung auf Basis der Temperaturen des Thermoöls bzw. des Verbrennungsabgases vorgenommen wird, ist sie nicht darauf beschränkt sondern kann auch ausgehend von einem Phasenzustand des PCM in dem Latentwärmespeicher 5 vorgenommen werden. Dabei können folgende Zustände unterschieden werden, die z.B. anhand von entsprechenden Sensoren von der Steuerung erkannt werden:
- Kalt (Cold): das PCM ist fest und seine Temperatur beträgt weniger als 100° C;
- Niedrig (Low): die Temperatur des PCM befindet sich an der unteren Phasenwechseltemperatur;
- Ökonomisch (Economizing): die Temperatur des PCM befindet sich in der Mitte des Phasenwechseltemperaturbereichs;
- Vollständig geladen (Fully Charged): das PCM ist verflüssigt
- Überladen (Overcharged): die PCM-Temperatur liegt über 160° C.

Die Ladeleistung und Entladeleistung werden dann entsprechend des Ladezustands gesteuert.

Bevorzugtes Ziel der Steuerung ist es, am Ende eines Brauprozesses, also nach der energieintensiveren Würzedruckkochung, den Latentspeicher komplett geladen zu haben, sodass beim Folgesud die anfangs niedrigeren Brauprodukttemperaturen überwiegend aus der gespeicherten Wärme des Latentwärmespeichers im Vorwärmraum erreicht werden (Entladebetrieb) und erst bei Eintritt in den Phasenwechselbereich, d. h. einer Temperatur des Thermoöls zwischen 120° C und 130° C, wieder zur Ladung geschritten wird.

Durch Einsatz alternativer Phasenwechselmaterialien und/oder Wärmetransportmittel können auch andere Temperaturbereiche als die voranstehend genannten erreicht werden, die lediglich als Beispiele dienen, die anhand eines beispielhaften Brauprozesses (Erwärmung von Maische und/oder Würze) genannt wurden.

## Patentansprüche

1. Vorrichtung zum Erwärmen eines fermentierbaren Ausgangsstoffes zur Getränkeherstellung mit
einer innerhalb eines Brennraums (3) angeordneten Leitung (1a), über die ein Teil einer von einer Wärmequelle (11) in dem Brennraum (3) durch ein erstes Wärmetransportmittel abgegebenen Wärme zu dem in der Leitung (1, 1a, 1b) strömenden fermentierbaren Ausgangsstoff übertragbar ist,
**gekennzeichnet durch**
einen dem Brennraum (3) nachgeschalteten Wärmespeicher (5) zur Speicherung eines Teils der **durch** das erste Wärmetransportmittel transportierten Restwärme, wobei die Leitung (1, 1a, 1b) derart angeordnet ist, dass stromaufwärts des Brennraums (3) **durch** die in dem Wärmespeicher (5) gespeicherte Wärme eine Vorerwärmung des in der Leitung (1b) strömenden fermentierbaren Ausgangsstoffes in einem Vorwärmraum (19) stattfindet.

2. Vorrichtung zum Erwärmen eines fermentierbaren Ausgangsstoffes nach Anspruch 1, wobei
zwischen dem Brennraum (3) und dem Wärmespeicher (5) eine Übertragung eines Teils der Restwärme von dem ersten Wärmetransportmittel zu einem zweiten Wärmetransportmittel stattfindet.

3. Vorrichtung zum Erwärmen eines fermentierbaren Ausgangsstoffes nach Anspruch 2, wobei das erste Wärmetransportmittel ein Gas, bevorzugt ein Abgas einer Verbrennung, und das zweite Wärmetransportmittel eine Flüssigkeit, bevorzugt ein Thermoöl oder Wasser ist und/oder die Übertragung eines Teils der Restwärme von dem ersten Wärmetransportmittel zu dem zweiten Wärmetransportmittel mittels eines Abzweigs, eines Schaltventils, einer Fluidpumpe oder einem Ventilator (9) erfolgt.

4. Vorrichtung zum Erwärmen eines fermentierbaren Ausgangsstoffes nach einem der Ansprüche 2 oder 3, wobei die Übertragung eines Teils der Restwärme von dem ersten Wärmetransportmittel zu dem zweiten Wärmetransportmittel erfolgt, wenn das erste Wärmeübertragungsmittel eine vorbestimmte Mindesttemperatur aufweist.

5. Vorrichtung zum Erwärmen eines fermentierbaren Ausgangsstoffes nach einem der Ansprüche 1 bis 4, wobei der Wärmespeicher in Form von mindestens einem Latentwärmespeicher (5) ausgebildet ist, in dem eine Übertragung von Wärme von dem Wärmetransportmittel zu einem Phasenwechselmaterial in dem Latentwärmespeicher (5) oder umgekehrt stattfindet.

6. Vorrichtung zum Erwärmen eines fermentierbaren Ausgangsstoffes nach Anspruch 5, wobei
als Phasenwechselmaterial ein Salz oder ein Paraffin eingesetzt ist, wobei bevorzugt dessen Verflüssigungstemperatur zwischen 130° C und 150° C liegt und dessen Rekristallisierungstemperatur zwischen 130° C und 120° C liegt.

7. Vorrichtung zum Erwärmen eines fermentierbaren Ausgangsstoffes nach Anspruch 5 oder 6, wobei
Steuermittel vorgesehen sind, die eine Zufuhr des zweiten Wärmetransportmittels zu dem Vorwärmraum (19) und/oder dem Latentwärmespeicher (5) basierend auf einer Temperatur (T6) des ersten Wärmetransportmittels stromabwärts von dem Brennraum (3) und/oder einer Temperatur (T2) des zweiten Wärmetransportmittels stromabwärts von dem Vorwärmraum (19) steuern.

8. Vorrichtung zum Erwärmen eines fermentierbaren Ausgangsstoffes nach Anspruch 7, wobei die Steuermittel in Form einer Ladepumpe (17) und einer Entladepumpe (15) bereitgestellt sind, wobei
die Ladepumpe (17) in einem eingeschalteten Zustand und die Entladepumpe (15) in einem ausgeschalteten Zustand eine Strömung des zweiten Wärmetransportmittels durch den Latentwärmespeicher (5) in einer ersten Richtung bewirken,
die Ladepumpe (17) in einem ausgeschalteten Zustand und die Entladepumpe (15) in einem eingeschalteten Zustand eine Strömung des zweiten Wärmetransportmittels durch den Vorwärmraum (19) und den Latentwärmespeicher (5) in einer zweiten Richtung bewirken, und
die Ladepumpe (17) in einem eingeschalteten Zustand und die Entladepumpe (15) in einem eingeschalteten Zustand eine Strömung des zweiten Wärmetransportmittels durch den Vorwärmraum (19) und den Latentwärmespeicher (5) in der ersten Richtung bewirken.

9. Verfahren zum Erwärmen eines fermentierbaren Ausgangsstoffes zur Getränkeherstellung mit den Schritten
- Transportieren des fermentierbaren Ausgangsstoffes durch eine Leitung (1, 1a, 1b),
- Erwärmen des fermentierbaren Ausgangsstoffes mittels Übertragen eines Teils einer von einer Wärmequelle (11) über ein Wärmetransportmittel abgegebenen Wärme zu dem in der Leitung (1a) strömenden fermentierbaren Ausgangsstoff in einem Brennraum (3),
**gekennzeichnet durch**
- Speichern eines Teils der **durch** das Wärmetransportmittel transportierten Restwärme in einem dem Brennraum (3) nachgeschalteten Wärmespeicher (5), und
- Vorerwärmen des in der Leitung (1b) strömenden fermentierbaren Ausgangsstoffes stromaufwärts des Brennraums (3) **durch** die in dem Wärmespeicher (5) gespeicherte Wärme in einem Vorwärmraum (19).

10. Verfahren zum Erwärmen eines fermentierbaren Ausgangsstoffes nach Anspruch 9, wobei
zwischen dem Brennraum (3) und dem Wärmespeicher (5) ein Teil der Restwärme von dem ersten Wärmetransportmittel zu einem zweiten Wärmetransportmittel übertragen wird.

11. Verfahren zum Erwärmen eines fermentierbaren Ausgangsstoffes nach Anspruch 10, wobei das erste Wärmetransportmittel ein Gas, bevorzugt ein Abgas einer Verbrennung, und das zweite Wärmetransportmittel eine Flüssigkeit, bevorzugt ein Thermoöl oder Wasser ist, die in einem geschlossenen, über den Wärmespeicher geführten Kreislauf (7) geführt wird.

12. Verfahren zum Erwärmen eines fermentierbaren Ausgangsstoffes nach einem der Ansprüche 10 bis 11, wobei Wärme von einem der Wärmetransportmittel zu einem Phasenwechselmaterial in dem als mindestens ein Latentwärmespeicher (5) ausgebildeten Wärmespeicher oder umgekehrt übertragen wird.

13. Verfahren zum Erwärmen eines fermentierbaren Ausgangsstoffes nach Anspruch 12, wobei
a) das Vorerwärmen des in der Leitung (1b) strömenden fermentierbaren Ausgangsstoffes in dem Vorwärmraum (19) durch Entladen des Latentwärmespeichers (5) erfolgt, indem verursacht wird, dass das zweite Wärmetransportmittel von dem Latentwärmespeicher (5) zu dem Vorwärmraum (19) strömt, wenn die Temperatur des ersten Wärmetransportmittels unterhalb einer vorbestimmten Grenztemperatur liegt,
b) das Vorerwärmen des in der Leitung (1b) strömenden fermentierbaren Ausgangsstoffes in dem Vorwärmraum (19) und gleichzeitiges Laden des Latentwärmespeichers (5) erfolgt, indem verursacht wird, dass das zweite Wärmetransportmittel in einem geschlossenen Kreislauf (7) über einen Wärmetauscher (13), an dem eine Übertragung von Wärme von dem ersten Wärmetransportmittel zu dem zweiten Wärmetransportmittel stattfindet, durch den Latentwärmespeicher (5) und den Vorwärmraum (19) strömt, und
c) lediglich ein Laden des Latentwärmespeichers (5) erfolgt, indem verursacht wird, dass ein Zugang zu dem Vorwärmraum (19) versperrt wird, während das zweite Wärmetransportmittel in dem geschlossenen Kreislauf (7) über den Wärmetauscher (13), an dem eine Übertragung von Wärme von dem ersten Wärmetransportmittel zu dem zweiten Wärmetransportmittel stattfindet, und durch den Latentwärmespeicher (5) strömt.

14. Verfahren zum Erwärmen eines fermentierbaren Ausgangsstoffes nach Anspruch 13, wobei
Schritt a) durchgeführt wird, solange eine Temperatur des ersten Wärmetransportmittels stromabwärts des Brennraums (3) unter einer vorgegebenen Mindesttemperatur liegt und ein Mindestanteil des Phasenwechselmaterials in flüssiger Form vorliegt,
Schritt b) durchgeführt wird, wenn die Temperatur des ersten Wärmetransportmittels stromabwärts des Brennraums (3) die vorgegebene Mindesttemperatur überschritten hat,
Schritt c) durchgeführt wird, wenn die Temperatur des ersten Wärmetransportmittels stromabwärts des Brennraums (3) eine vorgegebene Ladetemperatur überschritten hat.

15. Verfahren zum Erwärmen eines fermentierbaren Ausgangsstoffes nach Anspruch 13 oder 14, wobei
in dem Schritt b) eine Temperaturregelung in dem Brennraum (3) in Abhängigkeit einer Temperaturdifferenz (T5 - T3) des fermentierbaren Ausgangsstoffes zwischen einem Punkt stromaufwärts des Vorwärmraums (19) und stromabwärts des Brennraums (3) vorgenommen wird.

## Claims

1. Device for heating a fermentable starting product for beverage production, having
a line (1a) which is arranged within a combustion chamber (3) and via which part of the heat provided by a heat source (11) in the combustion chamber (3) can be transferred by means of a first heat transport medium to the fermentable starting product flowing in the line (1, 1a, 1b),
**characterized in that**
a heat store (5), connected downstream of the combustion chamber (3), for storing part of the residual heat transported by the first heat transport medium, the line (1, 1a, 1b) being arranged such that, in a preheating chamber (19) upstream of the combustion chamber (3), the heat stored in the heat store (5) preheats the fermentable starting product flowing in the line (1b).

2. Device for heating a fermentable starting product according to Claim 1, wherein
transfer of part of the residual heat from the first heat transport medium to a second heat transport medium takes place between the combustion chamber (3) and the heat store (5).

3. Device for heating a fermentable starting product according to Claim 2, wherein the first heat transport medium is a gas, preferably an exhaust gas from combustion, and the second heat transport medium is a liquid, preferably a thermal oil or water, and/or the transfer of part of the residual heat from the first heat transport medium to the second heat transport medium takes place by means of a branch, a switching valve, a fluid pump or a fan (9).

4. Device for heating a fermentable starting product according to either of Claims 2 and 3, wherein the transfer of part of the residual heat from the first heat transport medium to the second heat transport medium takes place when the first heat transport medium is at a predetermined minimum temperature.

5. Device for heating a fermentable starting product according to one of Claims 1 to 4, wherein the heat store is designed in the form of at least one latent heat store (5) in which heat is transferred from the heat transport medium to a phase-change material in the latent heat store (5) or vice versa.

6. Device for heating a fermentable starting product according to Claim 5, wherein
a salt or paraffin is used as the phase-change material, wherein
its melting point is preferably between 130°C and 150°C and its recrystallization temperature is preferably between 130°C and 120°C.

7. Device for heating a fermentable starting product according to Claim 5 or 6, wherein
there are provided control means which control a supply of the second heat transfer medium to the preheating chamber (19) and/or to the latent heat store (5) on the basis of a temperature (T6) of the first heat transport medium downstream of the combustion chamber (3) and/or a temperature (T2) of the second heat transport medium downstream of the preheating chamber (19).

8. Device for heating a fermentable starting product according to Claim 7, wherein the control means are provided in the form of a charge pump (17) and a discharge pump (15), wherein
the charge pump (17) in an activated state and the discharge pump (15) in a deactivated state effect a flow of the second heat transport medium through the latent heat store (5) in a first direction,
the charge pump (17) in a deactivated state and the discharge pump (15) in an activated state effect a flow of the second heat transport medium through the preheating chamber (19) and the latent heat store (5) in a second direction, and
the charge pump (17) in an activated state and the discharge pump (15) in an activated state effect a flow of the second heat transport medium through the preheating chamber (19) and the latent heat store (5) in the first direction.

9. Method for heating a fermentable starting product for beverage production, having the steps of:
- transporting the fermentable starting product through a line (1, 1a, 1b),
- heating the fermentable starting product by transferring part of the heat given off by a heat source (11), via a heat transport medium, to the fermentable starting product flowing in the line (1a) in a combustion chamber (3),
**characterized by**
- storing part of the residual heat transported by the heat transport medium in a heat store (5) connected downstream of the combustion chamber (3), and
- preheating, in a preheating chamber (19) upstream of the combustion chamber (3), the fermentable starting product flowing in the line (1b) using the heat stored in the heat store (5).

10. Method for heating a fermentable starting product according to Claim 9, wherein
between the combustion chamber (3) and the heat store (5) part of the residual heat is transferred from the first heat transport medium to a second heat transport medium.

11. Method for heating a fermentable starting product according to Claim 10, wherein the first heat transport medium is a gas, preferably an exhaust gas from combustion, and the second heat transport medium is a liquid, preferably a thermal oil or water, which is conveyed in a closed circuit (7) routed via the heat store.

12. Method for heating a fermentable starting product according to either of Claims 10 and 11, wherein heat is transferred from one of the heat transport media to a phase-change material in the heat store, which is designed as at least one latent heat store (5), or vice versa.

13. Method for heating a fermentable starting product according to Claim 12, wherein
a) the fermentable starting product flowing in the line (1b) is preheated in the preheating chamber (19) by discharging the latent heat store (5), by causing the second heat transport medium to flow from the latent heat store (5) to the preheating chamber (19) when the temperature of the first heat transport medium is below a predetermined limit temperature,
b) the fermentable starting product flowing in the line (1b) is preheated in the preheating chamber (19) at the same time as the latent heat store (5) is charged, by causing the second heat transport medium to flow in a closed circuit (7) via a heat exchanger (13), at which heat is transferred from the first heat transport medium to the second heat transport medium, through the latent heat store (5) and the preheating chamber (19), and
c) only charging of the latent heat store (5) takes place by causing access to the preheating chamber (19) to be blocked while the second heat transport medium flows in the closed circuit (7) via the heat exchanger (13), at which heat is transferred from the first heat transport medium to the second heat transport medium, and through the latent heat store (5).

14. Method for heating a fermentable starting product according to Claim 13, wherein
step a) is carried out provided that a temperature of the first heat transport medium downstream of the combustion chamber (3) is below a predefined minimum temperature and a minimum proportion of the phase change material is in liquid form,
step b) is carried out when the temperature of the first heat transport medium downstream of the combustion chamber (3) has exceeded the predefined minimum temperature,
step c) is carried out when the temperature of the first heat transport medium downstream of the combustion chamber (3) has exceeded a predefined charging temperature.

15. Method for heating a fermentable starting product according to Claim 13 or 14, wherein
in step b) the temperature in the combustion chamber (3) is controlled in dependence on a temperature difference (T5 - T3) of the fermentable starting product between a point upstream of the preheating chamber (19) and downstream of the combustion chamber (3).

## Revendications

1. Dispositif pour le réchauffage d'une matière première fermentescible en vue de la production de boissons, avec
une conduite (1a) disposée à l'intérieur d'une chambre de combustion (3), par laquelle une partie d'une chaleur cédée par une source de chaleur (11) dans la chambre de combustion (3) au moyen d'un premier agent de transport de chaleur peut être transférée à la matière première fermentescible circulant dans la conduite (1, 1a, 1b),
**caractérisé par** un accumulateur de chaleur (5) installé en aval de la chambre de combustion (3) pour l'accumulation d'une partie de la chaleur résiduelle transportée par le premier agent de transport de chaleur, dans lequel la conduite (1, 1a, 1b) est disposée de telle manière qu'il se produise dans une chambre de préchauffage (19), en amont de la chambre de combustion (3), par la chaleur accumulée dans l'accumulateur de chaleur (5), un préchauffage de la matière première fermentescible circulant dans la conduite (1b).

2. Dispositif pour le réchauffage d'une matière première fermentescible selon la revendication 1, dans lequel il se produit entre la chambre de combustion (3) et l'accumulateur de chaleur (5) un transfert d'une partie de la chaleur résiduelle du premier agent de transport de chaleur à un deuxième agent de transport de chaleur.

3. Dispositif pour le réchauffage d'une matière première fermentescible selon la revendication 2, dans lequel le premier agent de transport de chaleur est un gaz, de préférence un gaz d'échappement d'une combustion, et le deuxième agent de transport de chaleur est un liquide, de préférence une huile thermique ou l'eau, et/ou le transfert d'une partie de la chaleur résiduelle du premier agent de transport de chaleur au deuxième agent de transport de chaleur est effectué au moyen d'un branchement, d'une soupape de commande, d'une pompe à fluide ou d'un ventilateur (9).

4. Dispositif pour le réchauffage d'une matière première fermentescible selon une des revendications 2 ou 3, dans lequel le transfert d'une partie de la chaleur résiduelle du premier agent de transport de chaleur au deuxième agent de transport de chaleur est effectué lorsque le premier agent de transport de chaleur présente une température minimale prédéterminée.

5. Dispositif pour le réchauffage d'une matière fermentescible selon l'une quelconque des revendications 1 à 4, dans lequel l'accumulateur de chaleur est réalisé sous la forme d'au moins un accumulateur de chaleur latente (5), dans lequel un transfert de chaleur de l'agent de transport de chaleur à un matériau à changement de phase se produit dans l'accumulateur de chaleur latente (5) ou inversement.

6. Dispositif pour le réchauffage d'une matière fermentescible selon la revendication 5, dans lequel on utilise comme matériau à changement de phase un sel ou une paraffine, dans lequel sa température de liquéfaction se situe de préférence entre 130°C et 150°C et sa température de recristallisation se situe de préférence entre 130°C et 120°C.

7. Dispositif pour le réchauffage d'une matière fermentescible selon la revendication 5 ou 6, dans lequel il est prévu des moyens de commande, qui commandent un ajout du deuxième agent de transport de chaleur à la chambre de préchauffage (19) et/ou à l'accumulateur de chaleur latente (5) sur la base d'une température (T6) du premier agent de transport de chaleur en aval de la chambre de combustion (3) et/ou d'une température (T2) du deuxième agent de transport de chaleur en aval de la chambre de préchauffage (19).

8. Dispositif pour le réchauffage d'une matière fermentescible selon la revendication 7, dans lequel les moyens de commande sont fournis sous la forme d'une pompe de charge (17) et d'une pompe de décharge (15),
dans lequel la pompe de charge (17) dans un état enclenché et la pompe de décharge (15) dans un état déclenché provoquent un écoulement du deuxième agent de transport de chaleur à travers l'accumulateur de chaleur latente (5) dans une première direction,
la pompe de charge (17) dans un état déclenché et la pompe de décharge (15) dans un état enclenché provoquent un écoulement du deuxième agent de transport de chaleur à travers la chambre de préchauffage (19) et l'accumulateur de chaleur latente (5) dans une deuxième direction, et
la pompe de charge (17) dans un état enclenché et la pompe de décharge (15) dans un état enclenché provoquent un écoulement du deuxième agent de transport de chaleur à travers la chambre de préchauffage (19) et l'accumulateur de chaleur latente (5) dans la première direction.

9. Procédé pour le réchauffage d'une matière fermentescible en vue de la production de boissons, comprenant les étapes suivantes:
- transporter la matière première fermentescible à travers une conduite (1, 1a, 1b),
- réchauffer la matière première fermentescible par transfert d'une partie d'une chaleur cédée par une source de chaleur (11) au moyen d'un agent de transport de chaleur à la matière première fermentescible circulant dans la conduite (1a) dans une chambre de combustion (3),
**caractérisé en ce que**
- on accumule une partie de la chaleur résiduelle transportée par l'agent de transport de chaleur dans un accumulateur de chaleur (5) installé en aval de la chambre de combustion (3), et
- on préchauffe la matière première fermentescible circulant dans la conduite (1b) en amont de la chambre de combustion (3) au moyen de la chaleur accumulée dans l'accumulateur de chaleur (5) dans une chambre de préchauffage (19).

10. Procédé pour le réchauffage d'une matière première fermentescible selon la revendication 9, dans lequel une partie de la chaleur résiduelle est transférée du premier agent de transport de chaleur à un deuxième agent de transport de chaleur entre la chambre de combustion (3) et l'accumulateur de chaleur (5).

11. Procédé pour le réchauffage d'une matière première fermentescible selon la revendication 10, dans lequel le premier agent de transport de chaleur est un gaz, de préférence un gaz d'échappement d'une combustion, et le deuxième agent de transport de chaleur est un liquide, de préférence une huile thermique ou l'eau, qui est conduit dans un circuit fermé (7) qui est conduit via l'accumulateur de chaleur.

12. Procédé pour le réchauffage d'une matière première fermentescible selon une des revendications 10 à 11, dans lequel de la chaleur est transférée d'un des agents de transport de chaleur à un matériau à changement de phase dans l'accumulateur de chaleur réalisé sous la forme d'au moins un accumulateur de chaleur latente (5) ou inversement.

13. Procédé pour le réchauffage d'une matière première fermentescible selon la revendication 12, dans lequel
a) on effectue le préchauffage de la matière première fermentescible circulant dans la conduite (1b) dans la chambre de préchauffage (19) par décharge de l'accumulateur de chaleur latente (5), par le fait que l'on fait en sorte que le deuxième agent de transport de chaleur s'écoule de l'accumulateur de chaleur latente (5) à la chambre de préchauffage (19), lorsque la température du premier agent de transport de chaleur se situe en dessous d'une température limite prédéterminée,
b) on effectue le préchauffage de la matière première fermentescible circulant dans la conduite (1b) dans la chambre de préchauffage (19) et en même temps la charge de l'accumulateur de chaleur latente (5), par le fait que l'on fait en sorte que le deuxième agent de transport de chaleur s'écoule à travers l'accumulateur de chaleur latente (5) et la chambre de préchauffage (19) dans un circuit fermé (7) via un échangeur de chaleur (13), dans lequel il se produit un transfert de chaleur du premier agent de transport de chaleur au deuxième agent de transport de chaleur, et
c) on effectue uniquement une charge de l'accumulateur de chaleur latente (5), par le fait que l'on fait en sorte qu'un accès à la chambre de préchauffage (19) soit fermé, pendant que le deuxième agent de transport de chaleur s'écoule dans le circuit fermé (7) via l'échangeur de chaleur (13), dans lequel il se produit un transfert de chaleur du premier agent de transport de chaleur au deuxième agent de transport de chaleur, et à travers l'accumulateur de chaleur latente (5).

14. Procédé pour le réchauffage d'une matière première fermentescible selon la revendication 13, dans lequel
on exécute l'étape a) aussi longtemps qu'une température du premier agent de transport de chaleur en aval de la chambre de combustion (3) se situe en dessous d'une température minimale prédéterminée et qu'il se trouve une proportion minimale du matériau à changement de phase sous forme liquide,
on exécute l'étape b), lorsque la température du premier agent de transport de chaleur en aval de la chambre de combustion (3) a dépassé la température minimale prédéterminée,
on exécute l'étape c), lorsque la température du premier agent de transport de chaleur en aval de la chambre de combustion (3) a dépassé une température de charge prédéterminée.

15. Procédé pour le réchauffage d'une matière première fermentescible selon la revendication 13 ou 14, dans lequel on procède à l'étape b) à une régulation de la température dans la chambre de combustion (3) en fonction d'une différence de température (T5 - T3) de la matière première fermentescible entre un point situé en amont de la chambre de préchauffage (19) et un point situé en aval de la chambre de combustion (3).
